# EUROPÄISCHE PATENTSCHRIFT

(11) **EP 0 972 667 B1**
(45) Veröffentlichungstag und Bekanntmachung des Hinweises auf die Patenterteilung: **25.09.2002**
(21) Anmeldenummer: 99113018.8
(22) Anmeldetag: 06.07.1999
(51) Int. Cl.: B60K 41/26

(54) **Kraftfahrzeug mit einem elektronisch gesteuerten Automatikgetriebe und einer fremdkraftbetätigten Feststellbremse**
Vehicle with electronic controlled automatic transmission and power-assisted parking brake
Véhicule avec transmission automatique à commande électronique et freinage de stationnement commandé par force externe

(30) Priorität: 15.07.1998 DE 19831733
(43) Veröffentlichungstag der Anmeldung: 19.01.2000
(73) Patentinhaber: Bayerische Motoren Werke Aktiengesellschaft, 80788 München (DE)
(72) Erfinder: Ehrmaier, Rudolf, 81927 München (DE); Siepker, Achim, 82194 Gröbenzell (DE); Neuner, Josef, 83064 Raubling (DE)
(74) Vertreter: Wesel-Mair, Julia (DE)

(56) Entgegenhaltungen:
- US-A- 4 281 736
- US-A- 4 768 610
- US-A- 5 415 467

## Beschreibung

Die Erfindung betrifft ein Kraftfahrzeug mit einem elektronisch gesteuerten Automatikgetriebe, welches eine Parksperre umfaßt, und einer fremdkraftbetätigten Feststellbremse gemäß dem Oberbegriff des Patentanspruchs 1.

Aus der DE 39 29 286 A1 ist ein Automatikgetriebe für Kraftfahrzeuge bekannt, bei dem die einzelnen Fahrstufen, beispielsweise P, R, N und D, elektronisch gesteuert eingelegt werden. Hierbei ist ein Bedienelement zur Anwahl der einzelnen Fahrstufen nicht mehr mechanisch mit dem Getriebe verbunden, sondern wirkt lediglich als elektrisches Schaltelement zur Anwahl der gewünschten Fahrstufe. Bei Betätigung des Bedienelements werden elektrische Kontakte geschlossen, deren Schaltimpulse von einem elektronischen Steuergerät verarbeitet und in entsprechende Befehle an die Stellglieder für die Fahrstufenauswahl und für die Gangschaltung umgewandelt werden. Wird mittels des Bedienelements die Fahrstufe P (Parksperrenposition) angewählt, werden Stellglieder in Form einer Sperreinrichtung aktiviert, um eine Parksperre einzustellen.

Aus der DE 196 25 019 ist ein elektronisch gesteuertes Automatikgetriebe bekannt, welches eine Parksperrenposition automatisch, abhängig von bestimmten Betriebsbedingungen einstellt, z. B. wenn die Fahrgeschwindigkeit des Kraftfahrzeugs gleich Null ist und der Zündstromkreis mit dem Zündschlüssel unterbrochen wurde. Auch hierbei wird eine Sperreinrichtung in Form eines Elektromagneten als Stellglied verwendet. Diese Anordnung weist bei Ausfall des elektrischen Systems eine Notentriegelung auf, welche den Zustand "Parksperre eingelegt" aufhebt.

Aus der US 4,892,014 ist eine elektrische Steuerung für ein Automatikgetriebe bekannt, bei dem eine Steuereinheit eine Parkbremse automatisch dann aktiviert, wenn zuvor die Parksperre wirksam eingelegt wurde. Die Parksperre wird erst dann wieder automatisch gelöst, wenn eine Reihe von Bedingungen erfüllt sind.

Problematisch bei diesen bekannten elektronisch gesteuerten Automatikgetrieben ist es, wenn entweder die Parksperre oder aber die Parkbremse funktionsunfähig wird und ausfällt.

Aufgabe der Erfindung ist es, ein Kraftfahrzeug mit einem elektronisch gesteuerten Automatikgetriebe anzugeben, bei dem die Funktion der Parksperre bzw. der fremdkraftbetätigten Feststellbremse auch dann erfüllt werden kann, wenn das entsprechende System ausfällt.

Diese Aufgabe wird durch die im Anspruch 1 angegebenen Merkmale gelöst.

Vorteilhafte Weiterbildungen der Erfindung sind in den Unteransprüchen definiert.

Erfindungsgemäß stellen sowohl die Parksperre als auch die fremdkraftbetätigte Feststellbremse ein zu dem anderen System jeweils redundantes Systems dar, welches im Fehlerfall die Funktion des jeweils anderen Systems übernehmen kann. Dadurch ist das Kraftfahrzeug in jedem Fall gegen Wegrollen gesichert. Ferner kann auf diese Weise im Normalbetrieb weiterhin die gesamte Funktionalitätsbreite sichergestellt werden, die durch diese beiden Systeme gegeben ist. Fällt ein System aus, so übernimmt das jeweils andere System dessen Funktion. Der Fahrer selbst muß sich keine Gedanken darüber machen, ob er das Fahrzeug mit der Parksperre oder der Feststellbremse zu sichern hat.

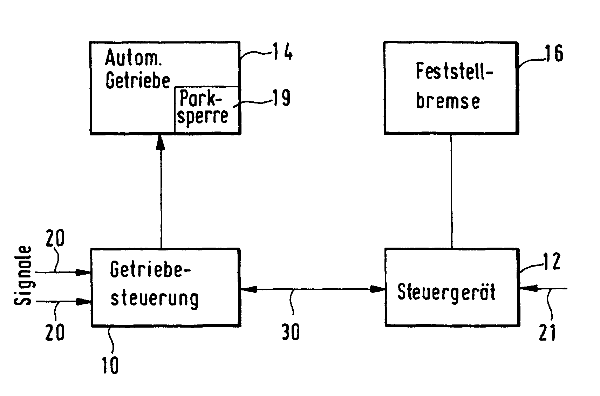

Die Erfindung wird nachfolgend anhand eines Ausführungsbeispiels und mit Bezug auf die beiliegende Zeichnung näher beschrieben. Die einzige Zeichnung zeigt eine Schemaskizze einer Getriebesteuerung und eines Steuergeräts der Feststellbremse, die miteinander in Verbindung stehen.

Gemäß der einzigen Figur ist in einem nicht dargestellten Fahrzeug eine Getriebesteuerung 10 vorgesehen, welches ein Automatikgetriebe 14 entsprechend vorgegebener Signale 20 sowie einem vorgegebenen Getriebealgorithmus steuert. Das Automatikgetriebe 14 umfaßt eine Parksperre 19, mit einer an sich bekannten Funktion. im vorliegenden Fall ist eine automatisierte Parksperre (Auto-P) vorgesehen. Bei der automatisierten Parksperre wird die Parksperre im normalen Betrieb dann aktiviert, wenn einerseits die Fahrzeuggeschwindigkeit v im wesentlichen Null ist und andererseits entweder der Schlüssel abgezogen ist, der Motor aus, die Zündung aus, die Stellung des Wahlhebels in Position D oder R ist oder der Gangwählhebel auch nach einer Zeit Δ t in Position N ist.

Parallel ist eine fremdkraftbetätigte Feststellbremse 16 vorgesehen, die von einem Steuergerät 12 angesteuert wird. Die Feststellbremse 16 erlaubt einen Komfort- oder automatisierten Betrieb, wobei sie beim Anfahren automatisch gelöst und beim Anhalten (v = 0) wieder angezogen wird.

Durch Betätigen eines separaten, nicht dargestellten Tasters kann die Feststellbremse manuell gelöst und gleichzeitig in eine Handbetätigung umgeschaltet werden.

Die Getriebesteuerung 10 und das Steuergerät 12 stehen über eine Leitung 30 miteinander in Verbindung. Über diese Leitung 30 kommunizieren beide Vorrichtungen 10, 12 miteinander. Jede Vorrichtung überprüft kontinuierlich die eigene Funktionsfähigkeit.

Alternativ könnte auch jede Vorrichtung die Funktionsfähigkeit des jeweils anderen Systems prüfen.

Taucht bei einem System, also bei der Parksperre 19 oder der Feststellbremse 16 eine Betriebsstörung auf, so wird dies der Getriebesteuerung 10 bzw. dem Steuergerät 12 übermittelt. Das jeweils andere Gerät erkennt die Betriebsstörung und aktiviert daraufhin entsprechend der Vorgabe an das andere System das eigene System.

Mit anderen Worten wird die fremdkraftbetätigte Feststellbremse 16 dann aktiviert, wenn die automatisierte Parksperre 19 betätigt werden müßte, jedoch bei dieser eine Funktionsunfähigkeit vorliegt. Andererseits springt die automatisierte Parksperre 19 dann ein, wenn die fremdkraftbetätigte Feststellbremse 16 aktiviert werden müßte, bei dieser aber eine Fehlfunktion vorliegt. Insofern übernimmt im Fehlerfall ein System die Funktion des jeweiligen anderen Systems, so daß eine Redundanz gegeben ist.

Mit der vorgenannten Erfindung wird auf einfache und kostengünstige Weise die Fahrzeugsicherheit gewährleistet und ohne zusätzlichen Hardwareaufwand ein redundantes System geschaffen.

## Patentansprüche

1. Kraftfahrzeug mit einem elektronisch gesteuerten Automatikgetriebe, welches eine Parksperre umfaßt, und einer fremdkraftbetätigten Feststellbremse, wobei die Parksperre und die fremdkraftbetätigte Feststellbremse unabhängig voneinander betätigbar sind,
**dadurch gekennzeichnet,**
**daß** eine Einrichtung vorgesehen ist, die sowohl die Parksperre als auch die fremdkraftbetätigte Feststellbremse auf ihre einwandfreie Funktion hin überprüft und bei einem Funktionsausfall des einen System das jeweils andere System betätigt.

2. Kraftfahrzeug nach Anspruch 1,
**dadurch gekennzeichnet,**
**daß** die Einrichtung in zweiteiliger Form vorliegt und je eine Form in der Parksperre und der fremdkraftbetätigten Feststellbremse integriert ist.

3. Kraftfahrzeug nach Anspruch 1 oder 2,
**dadurch gekennzeichnet,**
**daß** die Parksperre eine automatisierte Parksperre ist.

4. Kraftfahrzeug nach einem der Ansprüche 1 bis 3,
**dadurch gekennzeichnet,**
**daß** die Einrichtung eine elektronische Getriebesteuerung zum Betrieb des Getriebes und ein Steuergerät zum Betrieb der fremdkraftbetätigten Feststellbremse umfaßt, die beide miteinander in Verbindung stehen und ständig Informationen über den jeweiligen Betriebsstatus und die einwandfreie Funktion des jeweils zugehörigen Systems austauschen.

## Claims

1. A motor vehicle comprising an electronically controlled automatic transmission containing a stop brake and a power-assisted parking brake, wherein the stop brake and the power-assisted parking brake can be actuated independently of one another,
**characterised in that** a means is provided which checks that both the stop brake and the power-assisted parking brake are operating efficiently and actuates one system if the other system fails.

2. A motor vehicle according to claim 1, **characterised in that** the means is in two-part form, one part being incorporated in the stop brake and one in the power-assisted parking brake.

3. A motor vehicle according to claim 1 or 2, **characterised in that** the stop brake is an automatic stop brake.

4. A motor vehicle according to any of claims 1 to 3, **characterised in that** the means is an electronic transmission control for operating the transmission and comprises a control unit for operating the power-assisted parking brake, the control and the unit being interconnected and constantly exchanging information about the operating state of the respective system and whether it is in working order.

## Revendications

1. Véhicule équipé d'une boîte de vitesses automatique à commande électronique comprenant un blocage de parking et un frein de blocage à commande par une force extérieure, le blocage de parking et le frein de blocage à commande avec une force extérieure étant actionnés indépendamment l'un de l'autre,
**caractérisé par**
une installation qui vérifie le fonctionnement correct à la fois du blocage de parking et du frein d'arrêt commandé par une force extérieure et qui, en cas de défaillance de fonctionnement de l'un des systèmes, actionne l'autre système.

2. Véhicule automobile selon la revendication 1,
**caractérisé en ce que**
l'installation se présente sous une forme en deux parties et chaque forme est intégrée dans le blocage de parking et dans le frein d'arrêt à commande par une force extérieure.

3. Véhicule selon l'une des revendications 1 à 2,
**caractérisé en ce que**
le blocage de parking est un blocage automatique.

4. Véhicule selon l'une quelconque des revendications 1 à 3,
**caractérisé en ce que**
l'installation comporte une commande électronique de boîte de vitesses pour mettre en oeuvre la boîte de vitesses et une commande pour mettre en oeuvre le frein d'arrêt commandé par une force extérieure, ces deux moyens reliés échangeant en permanence des informations de l'état de fonctionnement respectif et du fonctionnement correct de chaque système.
